(19) Europäisches Patentamt
European Patent Office
Office européen des brevets

(11) Veröffentlichungsnummer: **0 535 461 A1**

(12) **EUROPÄISCHE PATENTANMELDUNG**

(21) Anmeldenummer: **92115919.0**

(22) Anmeldetag: **17.09.92**

(51) Int. Cl.⁵: **C07F 9/6506**, A01N 57/32, C07F 9/6512

(30) Priorität: **30.09.91 DE 4132492**

(43) Veröffentlichungstag der Anmeldung: **07.04.93 Patentblatt 93/14**

(84) Benannte Vertragsstaaten: **BE CH DE ES FR GB IT LI NL**

(71) Anmelder: **BAYER AG**
**W-5090 Leverkusen 1 Bayerwerk(DE)**

(72) Erfinder: **Sommer, Herbert, Dr.**
**Neuenkamper Strasse 32a**
**W-5650 Solingen 1(DE)**
Erfinder: **Hartwig, Jürgen, Dr.**
**Franz-Esser-Strasse 44**
**W-5090 Leverkusen 3(DE)**

(54) **Phosphorylierte Diazacycloalkane.**

(57) Die vorliegende Erfindung betrifft neue phosphorylierte Diazacycloalkane, Verfahren zu ihrer Herstellung und ihre Verwendung als Schädlingsbekämpfungsmittel, insbesondere als Insektizide und Nematizide. Die neuen Verbindungen besitzen die allgemeine Formel (I)

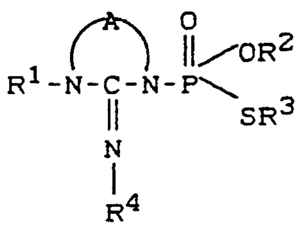

(I)

in welcher

- $R^1$ für Wasserstoff oder für jeweils gegebenenfalls durch Halogen oder Alkoxy substituiertes Alkyl, Alkenyl oder Aryl steht,
- A für einen gegebenenfalls durch Alkyl substituierten Alkandiylrest steht,
- $R^2$ für Alkyl steht,
- $R^3$ für Alkyl steht und
- $R^4$ für Wasserstoff oder für jeweils gegebenenfalls durch Halogen oder Alkoxy substituiertes Alkyl, Alkenyl oder Aryl steht.

EP 0 535 461 A1

Die vorliegende Erfindung betrifft neue phosphorylierte Diazacycloalkane, Verfahren zu ihrer Herstellung und ihre Verwendung als Schädlingsbekämpfungsmittel, insbesondere als Insektizide und Nematizide.

Es ist bekannt, daß bestimmte phosphorylierte Azaverbindungen, wie z.B. O-Ethyl-S-(1-methylpropyl)-(2-oxo-3-thiazolidinyl)-phosphorothioat/Fosthiazate, als Insektizide, Mitizide und Nematizide verwendet werden können (vergleiche US-P 4 590 182). Die Wirkung dieser bekannten Verbindungen ist jedoch, insbesondere bei niedrigen Aufwandmengen und Wirkstoffkonzenrationen, nicht ganz zufriedenstellend.

Die vorliegende Erfindung betrifft neue phosphorylierte Diazacycloalkane der allgemeinen Formel (I)

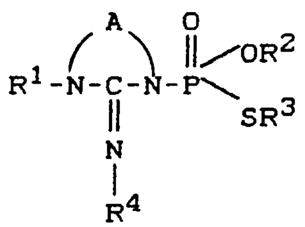

(I)

in welcher

- $R^1$ für Wasserstoff oder für jeweils gegebenenfalls durch Halogen oder Alkoxy substituiertes Alkyl, Alkenyl oder Aryl steht,
- A für einen gegebenenfalls durch Alkyl substituierten Alkandiylrest steht,
- $R^2$ für Alkyl steht,
- $R^3$ für Alkyl steht und
- $R^4$ für Wasserstoff oder für jeweils gegebenenfalls durch Halogen oder Alkoxy substituiertes Alkyl, Alkenyl oder Aryl steht,

Überraschenderweise zeigen die erfindungsgemäßen Verbindungen der Formel (I) erheblich stärkere insektizide, insbesondere bodeninsektizide Wirkung als die bekannte Verbindung O-Ethyl-S-(1-methylpropyl)-(2-oxo-3-thiazolidinyl)-phosphorothioat und sind im Gegensatz zu strukturverwandten Wirkstoffen des Standes der Technik sowohl gegen Bodeninsekten als auch gegen Bodennematoden sehr stark wirksam.

Die erfindungsgemäßen phosphorylierten Diazacycloalkane sind durch die Formel (I) allgemein definiert. Vorzugsweise stehen in Formel (I)

- $R^1$ für Wasserstoff; $C_1$-$C_8$-Alkyl (welches gegebenenfalls durch Fluor und/oder Chlor oder durch $C_1$-$C_4$-Alkoxy substituiert ist); $C_2$-$C_6$-Alkenyl (welches gegebenenfalls durch Fluor und/oder Chlor oder durch $C_1$-$C_4$-Alkoxy substituiert ist) oder für gegebenenfalls einfach bis mehrfach, gleich oder verschieden durch Halogen oder $C_1$-$C_4$-Alkoxy substituiertes Phenyl,
- A für gegebenenfalls einfach oder mehrfach, gleich oder verschieden durch Methyl oder Ethyl substitituiertes $C_2$-$C_4$-Alkandiyl,
- $R^2$ für $C_1$-$C_8$-Alkyl,
- R3 für $C_1$-$C_{12}$-Alkyl und
- $R^4$ für Wasserstoff; $C_1$-$C_8$-Alkyl (welches gegebenenfalls durch Fluor und/oder Chlor oder durch $C_1$-$C_4$-Alkoxy substituiert ist); $C_2$-$C_6$-Alkenyl (welches gegebenenfalls durch Fluor und/oder Chlor oder durch $C_1$-$C_4$-Alkoxy substituiert ist) oder für gegebenenfalls einfach bis mehrfach, gleich oder verschieden durch Halogen oder $C_1$-$C_4$-Alkoxy substituiertes Phenyl.

Besonders bevorzugt stehen in der Formel (I)

- $R^1$ für Wasserstoff; $C_1$-$C_6$-Alkyl (welches gegebenenfalls durch Fluor und/oder Chlor oder durch Methoxy oder Ethoxy substituiert ist); Vinyl, Propenyl oder Butenyl (welches jeweils gegebenenfalls durch Fluor und/oder Chlor oder durch Methoxy oder Ethoxy substituiert ist) oder für gegebenenfalls einfach bis dreifach, gleich oder verschieden durch Fluor, Chlor, Brom, Methoxy oder Ethoxy substituiertes Phenyl,
- A für gegebenenfalls einfach oder mehrfach, gleich oder verschieden durch Methyl oder Ethyl substituiertes Dimethylen oder Trimethylen,
- $R^2$ für $C_1$-$C_6$-Alkyl,
- $R^3$ für $C_1$-$C_{10}$-Alkyl und
- $R^4$ für Wasserstoff; $C_1$-$C_6$-Alkyl (welches gegebenenfalls durch Fluor und/oder Chlor oder durch Methoxy oder Ethoxy substituiert ist); Vinyl, Propenyl oder Butenyl (welches jeweils gegebenenfalls durch Fluor und/oder Chlor oder durch Methoxy oder Ethoxy substituiert ist) oder für gegebenenfalls einfach bis dreifach, gleich oder verschieden durch Fluor, Chlor, Brom, Methoxy oder Ethoxy substituiertes Phenyl

Ganz besonders bevorzugt stehen in der Formel (I)

- $R^1$ für Wasserstoff, $C_1$-$C_4$-Alkyl (welches gegebenenfalls durch Fluor und/oder Chlor oder durch Methoxy oder Ethoxy substituiert ist); Vinyl, 1-Propenyl, Allyl, oder 1-Butenyl (welches jeweils gegebenenfalls durch Fluor und/oder Chlor oder durch Methoxy oder Ethoxy substituiert ist) oder für gegebenenfalls einfach bis dreifach, gleich oder verschieden durch Fluor, Chlor, Brom, Methoxy oder Ethoxy substituiertes Phenyl,
- A für Dimethylen ($-CH_2CH_2-$) oder Trimethylen ($-CH_2CH_2CH_2-$),
- $R^2$ für Methyl, Ethyl, Propyl oder Isopropyl,
- $R^3$ für Ethyl, Propyl, Isopropyl, Butyl, Isobutyl, sec-Butyl, Pentyl, Hexyl, Heptyl oder Octyl und
- $R^4$ für Wasserstoff, $C_1$-$C_4$-Alkyl (welches gegebenenfalls durch Fluor und/oder Chlor oder durch Methoxy oder Ethoxy substituiert ist); Vinyl, 1-Propenyl, Allyl oder 1-Butenyl (welches jeweils gegebenenfalls durch Fluor und/oder Chlor oder durch Methoxy oder Ethoxy substituiert ist) oder für gegebenenfalls einfach bis dreifach, gleich oder verschieden durch Fluor, Chlor, Brom, Methoxy oder Ethoxy substituiertes Phenyl.

Man erhält die neuen Verbindungen der Formel (I), wenn man Azaverbindungen der allgemeinen Formel (II)

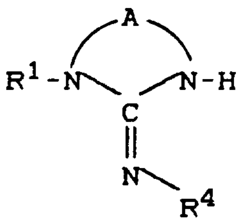

(II)

in welcher

A, $R^1$ und $R^4$ die oben angegebene Bedeutung haben,

oder deren Hydrochloride oder Hydrobromide mit Thiophosphorsäure-O,S-diester-chloriden der allgemeinen Formel (III)

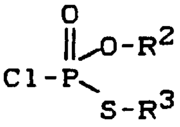

(III)

in welcher

$R^2$ und $R^3$ die oben angegebene Bedeutung haben,

gegebenenfalls in Gegenwart eines Säureakzeptors und gegebenenfalls in Gegenwart eines Verdünnungsmittels umsetzt.

Verwendet man als Ausgangsstoffe beispielsweise 1-Methyl-2-imino-imidazolidinund Thiophosphorsäure-O-ethylester-S-sec-butylester-chlorid, so kann der Reaktionsablauf des erfindungsgemäßen Verfahrens durch das folgende Formelschema beschrieben werden:

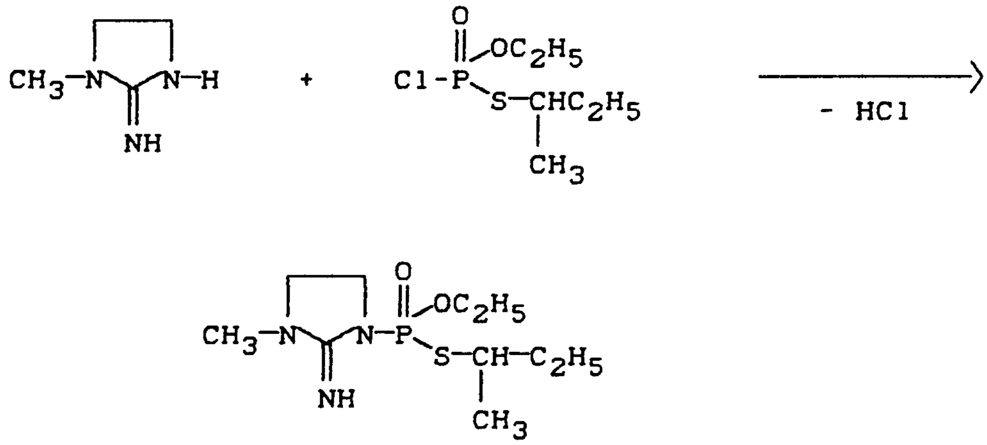


Die beim erfindungsgemäßen Verfahren zur Herstellung von Verbindungen der Formel (I) als Ausgangsstoffe zu verwendenden Azaverbindungen sind durch die Formel (II) allgemein definiert,

In Formel (II) haben A, $R^1$ und $R^4$ vorzugsweise bzw. insbesondere diejenigen Bedeutungen, die bereits oben im Zusammenhang mit der Beschreibung der erfindungsgemäßen Verbindungen der Formel (I) vorzugsweise bzw. als insbesondere bevorzugt für A, $R^1$ und $R^4$ angegeben wurden.

Die Ausgangsstoffe der Formel (II) sind bekannt und/oder können nach an sich bekannten Verfahren hergestellt werden (vergleiche unter anderem DE-OS 21 40 405; DE-OS 21 44 013; US 3 812 144; Synthesis 1987 (5), 460-466; J. Org. Chem., 44 (25), 4536-4543, 1979; Arzneim.-Forsch., 28 (10), 1676-1681, 1978).

Die beim erfindungsgemäßen Verfahren weiter als Ausgangsstoffe zu verwendenden Thiophosphorsäure-O,S-diester-chloride sind durch die Formel (III) allgemein definiert.

In Formel (III) haben $R^2$ und $R^3$ vorzugsweise bzw. insbesondere diejenigen Bedeutungen, die bereits oben im Zusammenhang mit der Beschreibung der erfindungsgemäßen Verbindungen der Formel (I) vorzugsweise bzw. als insbesondere bevorzugt für $R^2$ und $R^3$ angegeben wurden.

Die Ausgangsstoffe der Formel (III) sind bekannt und/ oder können nach an sich bekannten Verfahren hergestellt werden (vgl. DE-A 2527308; DE-A 2615342; DE-A 2642982; DE-A 2804796).

Das erfindungsgemäße Verfahren zur Herstellung der Verbindungen der Formel (I) wird vorzugsweise unter Verwendung von Verdünnungsmitteln durchgeführt. Als Verdünnungsmittel kommen dabei praktisch alle inerten organischen Lösungsmittel infrage. Hierzu gehören vorzugsweise aliphatische und aromatische, gegebenenfalls halogenierte Kohlenwasserstoffe wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether wie Diethyl- und Dibutylether, Glykoldimethylether und Diglykoldimethylether, Tetrahydrofuran und Dioxan, Ketone wie Aceton, Methyl-ethyl-, Methyl-isopropyl- und Methyl-isobutylketon, Ester wie Essigsäuremethylester und -ethylester, Nitrile wie z. B. Acetonitril und Propionitril, Amide wie z. B. Dimethylformamid, Dimethylacetamid und N-Methyl-pyrrolidon sowie Dimethylsulfoxid, Tetramethylensulfon und Hexamethylphosphorsäuretriamid.

Als Säureakzeptoren können bei dem erfindungsgemäßen Verfahren alle üblicherweise für derartige Umsetzungen verwendbaren Säurebindemittel eingesetzt werden. Vorzugsweise infrage kommen Alkalimetall- und Erdalkalimetall-hydride, wie Lithium-, Natrium-, Kalium- und Calcium-hydrid, Hydroxide, wie Natrium- und Kaliumhydroxid, Alkalimetall- und Erdalkalimetall-carbonate und -hydrogencarbonate, wie Natrium- und Kalium-carbonat oder -hydrogencarbonat sowie Calciumcarbonat, Alkalimetallacetate, wie Natrium- und Kalium-acetat, Alkalimetallalkoholate, wie Natrium- und Kalium-tert-butylat, ferner basische Stickstoffverbindungen, wie Trimethylamin, Triethylamin, Tripropylamin, Tributylamin, Diisobutylamin, Dicyclohexylamin, Ethyldiisopropylamin, Ethyldicyclohexylamin, N,N-Dimethylbenzylamin, N,N-Dimethyl-anilin, Pyridin, 2-Methyl-, 3-Methyl-, 4-Methyl-, 2,4-Dimethyl-, 2,6-Dimethyl-, 2-Ethyl-, 4-Ethyl- und 5-Ethyl-2-methyl-pyridin, 1,5-Diazabicyclo-[4,3,0]-non-5-en (DBN), 1,8-Diazabicyclo-[5,4,0]-undec-7-en (DBU) und 1,4-Diazabicyclo-[2,2,2]-octan (DABCO).

Die Reaktionstemperaturen können bei dem erfindungsgemäßen Verfahren in einem größeren Bereich variiert werden. Im allgemeinen arbeitet man bei Temperaturen zwischen -20 °C und +80 °C, vorzugsweise bei Temperaturen zwischen 0 °C und 50 °C.

Das erfindungsgemäße Verfahren wird im allgemeinen unter Normaldruck durchgeführt. Es ist jedoch auch möglich, unter erhöhtem oder vermindertem Druck zu arbeiten.

Zur Durchführung des erfindungsgemäßen Verfahrens werden die jeweils benötigten Ausgangsstoffe im allgemeinen in angenähert äquimolaren Mengen eingesetzt. Es ist jedoch auch möglich, eine der beiden jeweils eingesetzten Komponenten in einem größeren Überschuß zu verwenden. Die Reaktionen werden im allgemeinen in einem geeigneten Verdünnungsmittel in Gegenwart eines Säureakzeptors durchgeführt, und das Reaktionsgemisch wird mehrere Stunden bei der jeweils erforderlichen Temperatur gerührt. Die Aufarbeitung erfolgt jeweils nach üblichen Methoden (vergleiche die Herstellungsbeispiele).

Die Verbindungen der Formel (I) eignen sich zur Bekämpfung von tierischen Schädlingen, vorzugsweise Arthropoden und Nematoden, insbesondere Insekten und Nematoden im Boden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus,

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp..

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Acanthoscelides obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varive stis, Atomaria spp., Oryzaephilus surinamensis, Antho nomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Cono derus spp., Melolontha melolontha, Amphimallon solsti tialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp..

Die erfindungsgemäßen Verbindungen der Formel (I) zeichnen sich durch hervorragende insektizide und nematizide Wirksamkeit aus. Sie zeigen insbesondere beim Einsatz gegen pflanzenschädigende Blattinsekten wie auch gegen Nematoden sehr starke Wirkung. Besonders hervorzuheben ist die exzellente (wurzelsystemische) Wirkung gegen Blattinsekten und Nematoden.

Die Wirkstoffe können in Abhängigkeit von ihren jeweiligen physikalischen und/oder chemischen Eigenschaften in übliche Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen infrage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen infrage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen infrage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen infrage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a..

Die Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

Herstellungsbeispiel

Beispiel 1

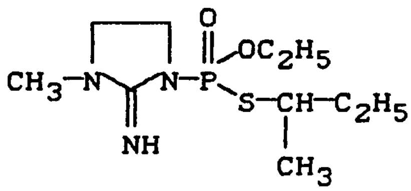

36 g (0,2 Mol) 1-Methyl-2-imino-imidazolidin Hydrobromid werden in 800 ml Dichlormethan und 320 g (0,8 Mol) 10%iger NaOH vorgelegt und bei Raumtemperatur unter schnellem Rühren 43,3 g (0,2 Mol) Thiophosphorsäure-O-ethylester-S-sec-butylester-chlorid zugetropft. Nach 30 Minuten Rühren wird die organische Phase abgetrennt, über Magnesiumsulfat getrocknet und unter vermindertem Druck eingeengt. Die Reinigung erfolgt an Kieselgel (Laufmittel Essigester/Ethanol 9:2). Man erhält 13,8 g (24,7 % der Theorie) 3-Methyl-2-imino-1-(thiophosphorsäure-O-ethyl-ester-S-sec-butylester)-imidazolidin.

$^{31}$P-NMR*): & = 33,66; 33,61.

Analog zu dem in Beispiel 1 beschriebenem Verfahren und unter Berücksichtigung der Angaben bei dem erfindungsgemäßen Verfahren können die nachfolgend in Tabelle 1 aufgeführten Verbindungen der Formel (I) erhalten werden

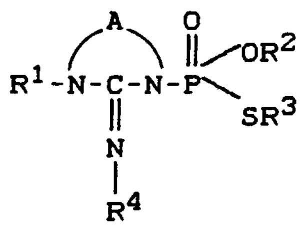

(I)

Tabelle 1

| Bsp.-Nr. | $R^1$ | - A - | $R^2$ | $R^3$ | $R^4$ | physikalische Konstante |
|---|---|---|---|---|---|---|
| 2 | $CH_3$ | $-CH_2-CH_2-$ | $-C_2H_5$ | $-C_4H_9s$ | 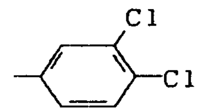 | $^{31}$P-NMR*): $\delta$ = 26,80; 26,86 |
| 3 | $CH_3$ | $-CH_2-CH_2-CH_2-$ | $-C_2H_5$ | $-C_4H_9s$ | 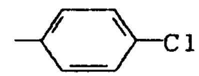 | $^{31}$P-NMR*): $\delta$ = 29,14; 29,36 |
| 4 | H | $-CH_2-CH_2-$ | $-C_2H_5$ | $-C_4H_9s$ | 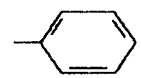 | $^{31}$P-NMR*): $\delta$ = 28,41 |
| 5 | $C_4H_9n$ | $-CH_2-CH_2-$ | $-C_2H_5$ | $-C_4H_9s$ | H | $^{31}$P-NMR*): $\delta$ = 27,59 |
| 6 | 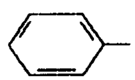 | $-CH_2-CH_2-$ | $-C_2H_5$ | $-C_4H_9s$ | H | $^{31}$P-NMR*): $\delta$ = 27,63 |
| 7 | $CH_3$ | $-CH_2-CH_2-$ | $-C_2H_5$ | $-C_6H_{13}n$ | H | |
| 8 | $CH_3$ | $-CH_2-CH_2-$ | $-C_2H_5$ | $-CH_2-C_4H_9iso$ | H | |
| 9 | $CH_3$ | $-CH_2-CH_2-$ | $-C_2H_5$ | $-CH_2-CH(C_2H_5)-C_2H_5$ | H | |

*) Die $^{31}$P-NMR-Spektren wurden in Deuterochloroform ($CDCl_3$) mit $H_3PO_4$ als externem Standard aufgenommen. Angegeben ist die chemische Verschiebung als $\delta$-Wert in ppm

Tabelle 1

| Bsp.-Nr. | $R^1$ | - A - | $R^2$ | $R^3$ | $R^4$ | physikalische Konstante |
|---|---|---|---|---|---|---|
| 10 | $CH_3$ | $-CH_2-CH_2-$ | $-C_2H_5$ | $-CH_2-CH(C_2H_5)-C_4H_{9n}$ | H | |
| 11 | 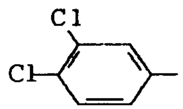 | $-CH_2-CH_2-$ | $-C_2H_5$ | $-C_4H_{9s}$ | H | |
| 12 | 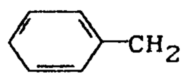 $CH_2-CH_2$ | $-CH_2-CH_2-$ | $-C_2H_5$ | $-C_4H_{9s}$ | H | |
| 13 | H | $-CH(CH_3)-CH_2-$ | $-C_2H_5$ | $-C_4H_{9s}$ | H | |
| 14 | $CH_3$ | $-CH_2-CH_2-$ | $-C_2H_5$ | $-C_3H_7$ | H | |
| 15 | $CH_3$ | $-CH_2-CH_2-CH_2-$ | $-C_2H_5$ | $-C_3H_7$ | H | |
| 16 | 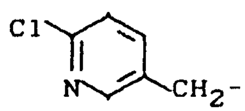 | $-CH_2-CH_2-$ | $-C_2H_5$ | $-C_3H_7$ | H | |
| 17 | $CH_3$ | $-CH_2-CH_2-$ | $-C_2H_5$ | $-C_8H_{17}n$ | H | |
| 18 | $CH_3$ | $-CH_2-CH_2-$ | $-C_2H_5$ | $-C_7H_{15n}$ | H | |

Verwendungsbeispiele:

In den Verwendungsbeispielen wird die nachstehend aufgeführte Verbindung (A) als Vergleichsverbindungen herangezogen:

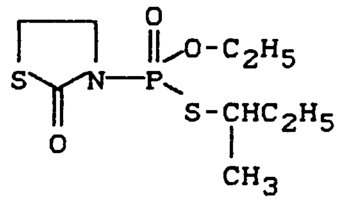

(A)

O-Ethyl-S-(1-methylpropyl)-(2-oxo-3-thiazolidinyl)-phosphorothioat/Fosthiazate (bekannt aus US-P 4509182).

Beispiel A

Grenzkonzentrations-Test / Wurzelsystemische Wirkung

Testinsekt: Phaedon cochleariae-Larven

Lösungsmittel: 4 Gewichtsteile Aceton

Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den behandelten Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100 %, wenn alle Testtiere abgetötet sind und 0 %, wenn noch genau so viele Testinsekten leben wie bei der unbehandelten Kontrolle.

Hierbei zeigte z.B. die Verbindung gemäß Beispiel 1 eine stark überlegene Wirksamkeit gegenüber dem Stand der Technik.

Beispiel B

Grenzkonzentrations-Test / Wurzelsystemische Wirkung

Testinsekt: Myzus persicae

Lösungsmittel: 4 Gewichtsteile Aceton

Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird, Man füllt den behandelten Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100 %, wenn alle Testtiere abgetötet sind und 0 %, wenn noch genau so viele Testinsekten leben wie bei der unbehandelten Kontrolle.

Hierbei zeigte z.B. die Verbindung gemäß Beispiel 1 eine stark überlegene Wirksamkeit gegenüber dem Stand der Technik.

Beispiel C

Wirkungsdauer-Test / Nematoden

Testnematoden: Meloidogyne incognita
Lösungsmittel: 4 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (mg/l) angegeben wird. Man füllt den Boden in 6 l Töpfe und läßt diese bei 15 °C stehen.

Im Abstand von 2 Wochen werden nach vorheriger erneuter Durchmischung Bodenproben von 375 ccm entnommen, dem behandelten Boden 125 ccm stark verseuchte Namatodenerde (Meloidogyne) zugemischt, mit Salatsamen besät und diese Töpfe bei einer Gewächshaustemperatur von 25 °C kultiviert.

Nach vier Wochen werden die Wurzeln auf Nematodenbefall (Wurzelgallen) untersucht und der Wirkungsgrad des Wirkstoffes in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden.

Hierbei zeigte z.B. die Verbindung gemäß Beispiel 1 eine stark überlegene Wirksamkeit gegenüber dem Stand der Technik.

Beispiel D

Wirkungsdauer-Test / Nematoden

Testnematoden: Globodera rostochiensis
Lösungsmittel: 4 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (mg/l) angegeben wird. Man füllt den Boden in 6 l Töpfe und läßt diese bei 15 °C stehen.

Im Abstand von 2 Wochen werden nach vorheriger erneuter Durchmischung Bodenproben von 375 ccm entnommen, dem behandelten Boden 125 ccm stark verseuchte Namatodenerde (Globodera) zugemischt, mit Kartoffelstecklingen bepflanzt und diese Töpfe bei einer Gewächshaustemperatur von 20 °C kultiviert.

Nach sechs Wochen werden die Wurzeln auf Nematodenbefall (Zysten) untersucht und der Wirkungsgrad des Wirkstoffes in % bestimmt. Der Wirkungsgrad ist 100 %, wenn der Befall vollständig vermieden wird, er ist 0 %, wenn der Befall genau so hoch ist wie bei den Wurzeln der Kontrollpflanzen aus unbehandeltem, aber in gleicher Weise verseuchtem Boden.

Hierbei zeigte z.B. die Verbindung gemäß Beispiel 1 eine stark überlegene Wirksamkeit gegenüber dem Stand der Technik.

**Patentansprüche**

**1.** Phosphorylierte Diazacycloalkane der allgemeinen Formel (I)

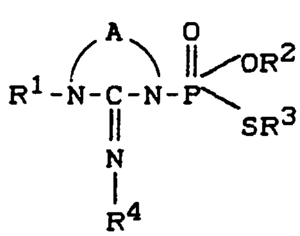

(I)

in welcher

- $R^1$ für Wasserstoff oder für jeweils gegebenenfalls durch Halogen oder Alkoxy substituiertes Alkyl, Alkenyl oder Aryl steht,
- A für einen gegebenenfalls durch Alkyl substituierten Alkandiylrest steht,
- $R^2$ für Alkyl steht,
- $R^3$ für Alkyl steht und
- $R^4$ für Wasserstoff oder für jeweils gegebenenfalls durch Halogen oder Alkoxy substituiertes Alkyl, Alkenyl oder Aryl steht.

**2.** Phosphorylierte Diazacycloalkane der Formel (I) gemäß Anspruch 1, in welcher

- $R^1$ für Wasserstoff; $C_1$-$C_8$-Alkyl (welches gegebenenenfalls durch Fluor und/oder Chlor oder durch $C_1$-$C_4$-Alkoxy substituiert ist); $C_2$-$C_6$-Alkenyl (welches gegebenenfalls durch Fluor und/oder Chlor oder durch $C_1$-$C_4$-Alkoxy substituiert ist) oder für gegebenenfalls einfach bis mehrfach, gleich oder verschieden durch Halogen oder $C_1$-$C_4$-Alkoxy substituiertes Phenyl, steht,
- A für gegebenenfalls einfach oder mehrfach, gleich oder verschieden durch Methyl oder Ethyl substitituiertes $C_2$-$C_4$-Alkandiyl steht,
- $R^2$ für $C_1$-$C_{12}$-Alkyl steht
- R3 für $C_1$-$C_8$-Alkyl steht und
- $R^4$ für Wasserstoff; $C_1$-$C_8$-Alkyl (welches gegebenenfalls durch Fluor und/oder Chlor oder durch $C_1$-$C_4$-Alkoxy substituiert ist); $C_2$-$C_6$-Alkenyl (welches gegebenenfalls durch Fluor und/oder Chlor oder durch $C_1$-$C_4$-Alkoxy substituiert ist) oder für gegebenenfalls einfach bis mehrfach, gleich oder verschieden durch Halogen oder $C_1$-$C_4$-Alkoxy substituiertes Phenyl steht.

**3.** Phosphorylierte Diazacycloalkane der Formel (I) gemäß Anspruch 1, in welcher

- $R^1$ für Wasserstoff; $C_1$-$C_6$-Alkyl (welches gegebenenfalls durch Fluor und/oder Chlor oder durch Methoxy oder Ethoxy substituiert ist); Vinyl, Propenyl oder Butenyl (welches jeweils gegebenenfalls durch Fluor und/oder Chlor oder durch Methoxy oder Ethoxy substituiert ist) oder für gegebenenfalls einfach bis dreifach, gleich oder verschieden durch Fluor, Chlor, Brom, Methoxy oder Ethoxy substituiertes Phenyl steht,
- A für gegebenenfalls einfach oder mehrfach, gleich oder verschieden durch Methyl oder Ethyl substituiertes Dimethylen oder Trimethylen steht,
- $R^2$ für $C_1$-$C_6$-Alkyl steht,
- $R^3$ für $C_1$-$C_{10}$-Alkyl steht und
- $R^4$ für Wasserstoff; $C_1$-$C_6$-Alkyl (welches gegebenenfalls durch Fluor und/oder Chlor oder durch Meth-oxy oder Ethoxy substituiert ist); Vinyl, Propenyl oder Butenyl (welches jeweils gegebenenfalls durch Fluor und/oder Chlor oder durch Methoxy oder Ethoxy substituiert ist) oder für gegebenenfalls einfach bis dreifach, gleich oder verschieden durch Fluor, Chlor, Brom, Methoxy oder Ethoxy substituiertes Phenyl steht.

**4.** Phosphorylierte Diazacycloalkane der Formel (I) gemäß Anspruch 1, in welcher

- $R^1$ für Wasserstoff, $C_1$-$C_4$-Alkyl (welches gegebenenfalls durch Fluor und/oder Chlor oder durch Methoxy oder Ethoxy substituiert ist); Vinyl, 1-Propenyl, Allyl, oder 1-Butenyl (welches jeweils gegebenenfalls durch Fluor und/oder Chlor oder durch Methoxy oder Ethoxy substituiert ist) oder für gegebenenfalls einfach bis dreifach, gleich oder verschieden durch Fluor, Chlor, Brom, Methoxy oder Ethoxy substituiertes Phenyl steht,
- A für Dimethylen ($-CH_2CH_2-$) oder Trimethylen ($-CH_2CH_2CH_2-$) steht,
- $R^2$ für Methyl, Ethyl, Propyl oder Isopropyl steht
- $R^3$ für Ethyl, Propyl, Isopropyl, Butyl, Isobutyl, sec-Butyl, Pentyl, Hexyl, Heptyl oder Octyl steht, und
- $R^4$ für Wasserstoff, $C_1$-$C_4$-Alkyl (welches gegebenenfalls durch Fluor und/oder Chlor oder durch Methoxy oder Ethoxy substituiert ist); Vinyl, 1-Propenyl, Allyl oder 1-Butenyl (welches jeweils gegebenenfalls durch Fluor und/oder Chlor oder durch Methoxy oder Ethoxy substituiert ist) oder für gegebenenfalls einfach bis dreifach, gleich oder verschieden durch Fluor, Chlor, Brom, Methoxy oder Ethoxy substituiertes Phenyl steht.

**5.** Verfahren zur Herstellung von phosphorylierten Diazacycloalkanen der allgemeinen Formel (I)

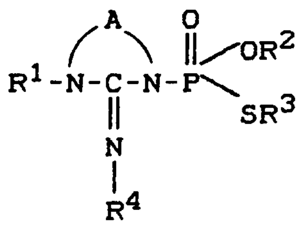

(I)

in welcher

$R^1$ für Wasserstoff oder für jeweils gegebenenfalls durch Halogen oder Alkoxy substituiertes Alkyl, Alkenyl oder Aryl steht,

A für einen gegebenenfalls durch Alkyl substituierten Alkandiylrest steht,

$R^2$ für Alkyl steht,

$R^3$ für Alkyl steht und

$R^4$ für Wasserstoff oder für jeweils gegebenenfalls durch Halogen oder Alkoxy substituiertes Alkyl, Alkenyl oder Aryl steht,

dadurch gekennzeichnet, daß man Azaverbindungen der Formel (II)

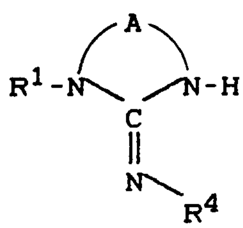

(II)

in welcher $R^1$, A und $R^4$ die oben angegebene Bedeutung haben,
oder deren Hydrochloride oder Hydrobromide mit Thiophosphorsäure - 0,S - diester-chloriden der allgemeinen Formel (III)

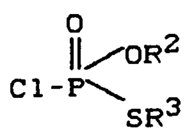

(III)

in welcher
$R^2$ und $R^3$ die oben angegebene Bedeutung haben, gegebenenfalls in Gegenwart eines Säureakzeptors und gegebenenfalls in Gegenwart eines Verdünnungsmittels umsetzt.

**6.** Schädlingsbekämpfungsmittel, gekennzeichnet durch einen Gehalt an mindestens einem phosphorylierten Diazacycloalkan der allgemeinen Formel (I).

**7.** Insektizide und Nematizide Mittel, gekennzeichnet durch einen Gehalt an mindestens einem phosphorylierten Diazacycloalkan der allgemeinen Formel (I).

**8.** Verfahren zur Bekämpfung von Insekten und Nematoden, dadurch gekennzeichnet, daß man phosphorylierte Diazacycloalkane der allgemeinen Formel (I) auf Insekten und/oder Nematoden und/oder deren Lebensraum einwirken läßt.

**9.** Verwendung von phosphorylierten Diazacycloalkanen der Formel (I) zur Bekämpfung von Insekten und/oder Nematoden.

**10.** Verfahren zur Herstellung von Schädlingsbekämpfungsmitteln, dadurch gekennzeichnet, daß man phosphorylierte Diazacycloalkane der Formel (I) mit Streckmitteln und/oder oberflächenaktiven Mitteln mischt.

Europäisches Patentamt

# EUROPÄISCHER RECHERCHENBERICHT

Nummer der Anmeldung

EP 92 11 5919

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | EP-A-0 192 060 (NIHON TOKUSHU NOYAKU SEIZO K.K.)<br>* Seite 150 - Seite 159; Anspruch 1 *<br>--- | 1,6-10 | C07F9/6506<br>A01N57/32<br>C07F9/6512 |
| Y | FR-A-2 376 155 (CIBA-GEIGY AG)<br>* Ansprüche 1-15 *<br>----- | 1,6-10 | |

RECHERCHIERTE SACHGEBIETE (Int. Cl.5 )

C07F
A01N

Der vorliegende Recherchenbericht wurde für alle Patentansprüche erstellt

| Recherchenort | Abschlußdatum der Recherche | Prüfer |
|---|---|---|
| DEN HAAG | 11 DEZEMBER 1992 | BESLIER L.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)